# EUROPEAN PATENT SPECIFICATION

(11) **EP 3 237 977 B1**
(45) Date of publication and mention of the grant of the patent: **21.10.2020**
(21) Application number: 14830389.4
(22) Date of filing: 23.12.2014
(51) Int. Cl.: G05B 19/042, G05B 15/02, F03B 15/00

(54) **CONTROLLING A WATER INSTALLATION DEVICE**
STEUERUNG EINES GERÄTES IN EINER WASSERANLAGE
COMMANDE D'UN DISPOSITIF D'UNE INSTALLATION HYDROLIQUE

(43) Date of publication of application: 01.11.2017
(73) Proprietor: Fluidra S.A., 08208 Sabadell (ES)
(72) Inventor: GIMÉNEZ PALLARÈS, David, E-08208 Sabadell (ES); PENELO ARIAS, Òscar, E-08232 Viladecavalls (ES); MELENDO CASADO, Domènec, E-08232 Viladecavalls (ES); BUJALANCE COLL, Daniel, E-08232 Viladecavalls (ES)
(74) Representative: ZBM Patents - Zea, Barlocci & Markvardsen
(86) International application number: PCT/EP2014/079281
(87) International publication number: WO 2016/102021

(56) References cited:
- EP-A2- 2 180 390
- EP-A2- 2 221 685
- CN-A- 103 955 175
- US-A1- 2010 249 956
- US-A1- 2014 222 241

## Description

### FIELD OF THE INVENTION

The present disclosure relates to methods of controlling a water installation device by a water installation controlling apparatus by using a descriptor file.

### BACKGROUND

Water installations, such as swimming pools, artificial spas, fish farms or the like, require that a number of their parameters are controlled at any given time. For example, in the case of swimming pools, the temperature, the quality, or the quantity of water needs to be monitored and controlled as well as, e.g. the lighting of the pool (internal lighting) or its surrounding.

Typically, these parameters are controlled by separate control devices (or water installation devices) that are arranged with the water installation.

Examples of water installation devices are thermostats, pumps, water purification equipment etc. Each water installation device typically has its own control panel which is arranged with the device. In this case, a user needs to be at the vicinity of the water installation in order to control the device or parameters that affect the functioning of the water installation.

In some cases, the water installation devices may be connectable to communication networks, such as e.g. the Internet. The control panel of a particular water installation device may then be remotely controlled by a user via e.g. a Wi-Fi connection.

EP2180390 A2 discloses an information holder for use with a water installation device with a reader that reads instructions related to preparation for operation cycle and displays on user interface. The user interface has software configured to communicate with an appliance adapted to perform a physical cycle of operation and to communicate with the information holder. A software is configured to cause the graphical user interface to communicate to a user information derived from the information holder. The information includes at least one step for activating a user interface component, preparing the appliance for the operation cycle, handling the appliance during the operation cycle and handling the appliance after the operation cycle.

CN103955175 B discloses a customized water-saving irrigating method, which involves establishing engineering model according to engineering object, and recording real-time data of terminal device by server and transmitting to browser interface.

EP2221685 A2 discloses a method and an apparatus to configure a process control system using an electronic description language (EDL) script. An example EDL script constructed in accordance with XML contains references to a controller, a workstation and to capabilities via corresponding XML expressions. In any of the previous approaches, a water installation device may require the execution of a particular application and user interface for providing the user with an appropriate environment for (either locally or remotely) controlling the device. If a water installation has several water installation devices, the user may be required to deal with several applications and user interfaces for controlling the whole water installation, which may complicate this task (of controlling the water installation).

A relatively large number of different applications and user interfaces may also generate drawbacks in the sense that maintenance and/or updating of said applications and user interfaces may be complex and expensive.

Besides, a water installation device may have implemented somewhere in the device some logic or rules governing the operation of the device, i.e. describing how the device operates or has to be operated. This implementation of logic/rules may be based on more or less complex technologies depending on e.g. the type of the water installation device, the manufacturer of the device, etc. Taking this into account and that these implementations (of logic/rules) are normally stored or placed inside the device itself, their maintenance and/or updating may be relatively complicated and expensive.

Additionally, as these implementations of logic/rules may be strongly dependent on the hardware of each water installation device, a large number of different types of implementations of logic/rules may co-exist in the same water installation. The maintenance and/or updating of this large number of implementations of logic/rules in the same water installation may be complicated and therefore expensive.

There is a need for new methods and objects for water installation devices at least partially solving the aforementioned problems.

### SUMMARY

In a first aspect, a method is provided of controlling a water installation device by a water installation controlling apparatus by using a descriptor file. The descriptor file comprises one or more operation instructions and one or more configuration instructions having a textual data format.

The method comprises processing the one or more operation instructions by the water installation controlling apparatus in such a way that operation of the water installation device is performed based on the one or more operation instructions.

The method further comprises processing the one or more configuration instructions by the water installation controlling apparatus in such a way that configuration of the water installation device via a user interface is performed based on the one or more configuration instructions.

In the context of the present disclosure, a descriptor file for a water installation device may be defined as a piece of software based on a code (i.e. instructions) written under a textual data format, i.e. a human-readable and machine-readable format. This piece of software may be seen as a descriptor of (i.e. as describing) how the device has to be operated by a water installation controlling apparatus and configured by a user (of the water installation).

The water installation controlling apparatus may have a processor configured to execute general purpose software and to process the descriptor file in such a way that the device is operated (by the controlling apparatus) and configured (by a user) in the context of said software of more general purpose.

This software of more general purpose may comprise e.g. calls to an interpreter dedicated to interpret and execute the content of the descriptor file. This way, the execution of the general purpose software can cause operation of the water installation device when required by performing necessary functions that are implemented in the descriptor file in a manner which is exclusive to the device. This "exclusive" implementation may depend on e.g. the hardware and/or firmware configuration of the device.

In this sense, a descriptor file may be considered conceptually similar to what is known in the field of computer science as a "driver".

A driver for a device may be defined as a piece of software providing physical (i.e. hardware dependent) implementations of functional (i.e. hardware independent) routines or procedures aimed at operating the device. For example, a driver for a printer may comprise a physical implementation (depending on this particular printer) of a general purpose function of printing a line (independent of any particular printer).

A descriptor file for a water installation device as described before solves operation aspects and configuration aspects of the device. The operation aspects may refer to functional and/or physical aspects. With this new approach, operation and configuration functionalities for a particular water installation device can be easily re-adjusted by simply replacing its corresponding descriptor file with a new release of the descriptor file.

A water installation device may have non-configurable and configurable features or parameters. For example, a lighting of a pool can function e.g. at a fixed voltage and can be e.g. programmable with a timer. The fixed voltage would be an example of non-configurable parameter, whereas its programming with a timer would be an example of configurable parameter.

Configuration parameters and how they have to be displayed and updated for configuring the water installation device can be defined (or described) in a descriptor file. This descriptor file can be processed by a water installation controlling apparatus in such a way that configuration of the water installation device is carried out by a user based on what is defined in the descriptor file.

With the proposed methods, different water installation devices connected with a water installation controlling apparatus can be operated by said controlling apparatus based on suitable descriptor files. Therefore, a centralized control of the water installation devices can be relatively easily implemented in the water installation by using the proposed descriptor files.

The water installation devices may be connected with the water installation controlling apparatus through wire connections or wireless connections or any other type of connections.

If several water installation devices have same (or similar) operation and configuration features, they can share a common descriptor file in the water installation controlling apparatus, such that co-existence of descriptor files (i.e. software) can be optimized in the controlling apparatus. This may significantly facilitate the maintenance (or updating) of descriptor files since a large number of water installation devices may require maintenance of a small number of descriptor files, which e.g. can be concentrated in the water installation controlling apparatus.

Additionally, a new water installation device may be relatively easily incorporated to a water installation. This is because the water installation controlling apparatus can be adapted by simply adding to the controlling apparatus a new descriptor file in accordance with the new water installation device to be integrated into the water installation.

With respect to the nature of descriptor files, the textual data format of the operation and configuration instructions may be, in some examples, an Extensible Markup Language (XML) format.

Therefore, the content of the descriptor files may be both human-readable and machine readable due to its textual data format (e.g. XML format). Taking this into account, the maintenance of the content (i.e. instructions) of the descriptor files may be easier and, therefore, cheaper in comparison with other similar files based on more "cryptic" codes or languages, such as e.g. C, assembler, etc.

Another aspect of using such a textual data format (e.g. XML format) may be that it may be interpretable by a corresponding interpreter tool or component comprised in the water installation controlling apparatus. The maintenance of the descriptor file with such a format may be further easier and cheaper in comparison with other similar approaches using a (programming) language that requires a compilation step, a linkage step, etc.

The one or more configuration instructions may comprise one or more interface instructions associated with an implementation of the user interface. Processing the one or more configuration instructions may comprise processing the one or more interface instructions in such a way that the configuration of the water installation device via the user interface is performed using said implementation of the user interface.

The implementation of the user interface may be comprised in the one or more interface instructions, i.e. inside the descriptor file. Alternatively, the one or more interface instructions may comprise a pointer pointing to the implementation of the user interface which is outside the descriptor file.

In some of the examples based on a pointer to the implementation of the user interface, the implementation of the user interface may be comprised in the water installation controlling apparatus or, alternatively, in a server connected with the water installation controlling apparatus.

Configurable parameters of a water installation device may be configured, either locally or remotely, by a user through a particular implementation of the user interface. Normally, presentation of the user interface can be triggered from/by a main/central technological platform, such as e.g. a manufacturer's website.

An aspect of the examples based on a pointer to the required implementation of the user interface may be that the descriptor file may act as a connection node between the main technological platform and the implementation of the user interface. The main technological platform may reside partially or totally at the water installation controlling apparatus, and/or at a server connected with the controlling apparatus, etc.

This last aspect may result in a relevant flexibility in the way that the implementation of the user interface is triggered from/by the main platform, so that e.g. different technologies (at the main platform and at the site where the user interface resides) can co-exist with the descriptor file acting as connection node between them.

Reusability of software may also be optimized because the same instance of the implementation of the user interface can be used for configuring various water installation devices of the same or similar type. This may facilitate the maintenance and/or updating of the user interface to be used since the number of instances of the implementation of the user interface can be minimized and concentrated at a common site.

The user interface to be used may be easily changed by simply replacing the current version of the descriptor file with a new release either containing or pointing to the new implementation of the user interface, which may be stored e.g. at the water installation controlling apparatus or at a sever connected with the water installation controlling apparatus.

Incorporation of a new water installation device to a water installation may also be facilitated if said device can be configured by using an existing/operative user interface. A suitable descriptor file can be added with a pointer pointing to the existing user interface implementation, such that the device can be configured from the first moment of its incorporation without the necessity of any action on the user interface.

According to examples, the implementation of the user interface may be configured to be embedded in a webpage. Therefore, the user interface can be used in the context of a website, e.g. manufacturer's website, such that users can configure their water installation devices from remote locations by accessing said website.

According to the invention, the one or more configuration instructions comprises one or more configuration register instructions associated with one or more configuration registers of the water installation device. Processing the one or more configuration instructions comprises processing the one or more configuration register instructions in such a way that the configuration of the water installation device via the user interface comprises displaying via the user interface the content of the one or more configuration registers of the water installation device in an updatable manner.

Water installation devices may be configured by assigning determined values to some physical registers and/or verifying the existence of certain values in some physical registers of the device. If the descriptor file "knows" the registers of the device that have to be updated for configuring the device, the user interface, which is also "known" by the descriptor file, can display said registers in a very flexible way because the descriptor file contains the necessary data in the form of configuration register instructions.

According to the invention, the one or more configuration register instructions are associated with the one or more configuration registers of the water installation device through a pointer pointing to a list of the one or more configuration registers which is outside the descriptor file.

In some of the examples based on a pointer pointing to a list of configuration registers outside the descriptor file, said list of configuration registers may be comprised in the water installation controlling apparatus or, alternatively, in a server connected with the water installation controlling apparatus.

In examples based on descriptor files having instructions associated with configuration registers to be displayed by the user interface may also provide advantages in terms of e.g. improved software/code reusability, facilitated software/code maintenance, etc. These advantages may result from e.g. a list of configuration registers that can be changed by simply replacing the corresponding descriptor file, a single list of configuration registers that can be re-used for a diversity of descriptor files (i.e. for a diversity of water installation devices), etc.

According to some examples, the one or more operation instructions may comprise one or more alarm register instructions associated with one or more alarm registers of the water installation device. Processing the one or more operation instructions may comprise processing the one or more alarm register instructions in such a way that the operation of the water installation device comprises detecting an alarm of the water installation device based on the content of the one or more alarm registers.

In some examples, the one or more operation instructions may comprise one or more pump register instructions associated with one or more pump registers of the water installation device. Processing the one or more operation instructions may comprise processing the one or more pump register instructions in such a way that the operation of the water installation device comprises generating a request/confirmation from the water installation device to a water pump device based on the content of the one or more pump registers.

Some of the registers of a water installation device may be dedicated to monitor alarms of the device and/or to generate requests/confirmations from the device to a pump. Some descriptor files may thus have operation instructions of how the registers of the device involved in such a monitoring/generation have to be processed. This way, the operation of the water installation device may result more flexible and efficient with corresponding descriptor files centralizing operation aspects such as e.g. those related to alarms and/or interaction with a pump device.

According to some examples, the one or more operation instructions may comprise one or more trigger instructions implementing one or more trigger conditions, in such a way that the operation of the water installation device comprises triggering activation of the water installation device when at least one of the trigger conditions is satisfied.

The one or more trigger conditions may comprise a trigger condition depending on a timer, such that said trigger condition can be considered satisfied when the timer reaches a predefined time value. Programming a water installation device with a timer may be an interesting functionality to be taken into account in descriptor files. This may provide advantages in terms of e.g. a more flexible and efficient operation of the water installation device. For example, a light system can be easily programmed to be activated when a time of the day with deficient natural light is reached.

The one or more trigger conditions may comprise a trigger condition depending on the status of a further water installation device, in such a way that said trigger condition can be considered satisfied when the further water installation device has reached a predefined status. The status of the further water installation device can be obtained by the water installation controlling apparatus by using a further descriptor file associated with the further water installation device. This may also provide advantages in terms of e.g. a more flexible and efficient operation of the water installation device. For example, a light system can be easily programmed to be activated when a light sensor (the further water installation device) has detected that natural light is below a predefined light threshold.

In the above examples based on one or more trigger conditions, different registers of the water installation device can be inspected and/or updated to perform the required functionalities. In this sense, suitable operation instructions can be comprised in the corresponding descriptor file for e.g. verifying if a register of the device contains a particular value, putting a specific value in a register of the device to cause a desired behavior, etc. For example, the abovementioned light system can be activated by putting a particular value in a particular register of the light system, the status of the aforementioned light sensor (e.g. detected level of natural light) can be obtained by inspecting a particular register of the light sensor, etc.

In some examples, the one or more operation instructions may comprise one or more data logging instructions associated with one or more data logging registers of the water installation device. Processing the one or more operation instructions comprises processing the one or more data logging instructions in such a way that the operation of the water installation device comprises periodically storing the content of the one or more data logging registers of the water installation device in a repository. This repository can be comprised in the water installation controlling apparatus or, alternatively, in a server connected with the water installation controlling apparatus.

There exist water installation devices which comprise one or more sensors, such as e.g. light sensors, temperature sensors, etc. In this case, the values obtained by the sensor(s) (e.g. temperature, amount of light) can be stored in one or more registers of the device, which are called herein data logging registers. A descriptor file associated with the device can comprise operation instructions configured to be processed by the water installation controlling apparatus in such a way that the controlling apparatus periodically stores the values obtained from the data logging register(s) into a repository.

An aspect of this data logging may be that the data collected in the repository (e.g. a database) can be used for later analysis to obtain conclusions about a variety of parameters, and these conclusions can be used to introduce improvements in the water installation. For example, in a heated pool, historical data of water temperature can be used to evaluate the performance of a corresponding water heater which can be re-adjusted depending on the conclusions of said evaluation for improving its performance.

In another aspect, a descriptor file suitable for performing any of the previously described methods is disclosed. In yet another aspect, a water installation controlling apparatus suitable for performing any of the previously described methods is disclosed. This water installation controlling apparatus may be connected with a server through a communications network, such as e.g. the Internet. The water installation controlling apparatus may be configured to download from the server a new release of the descriptor file.

### BRIEF DESCRIPTION OF DRAWINGS

Non-limiting examples of the present disclosure will be described in the following, with reference to the appended drawings, in which:
Figure 1 illustrates a block diagram of a water installation controlling apparatus comprising one or more descriptor files according to an example.
Figure 2 illustrates a block diagram of a water installation system comprising a water installation controlling apparatus similar to the one shown in Figure 1.
Figure 3 is a block diagram schematically illustrating a descriptor file according to an example.

### DESCRIPTION

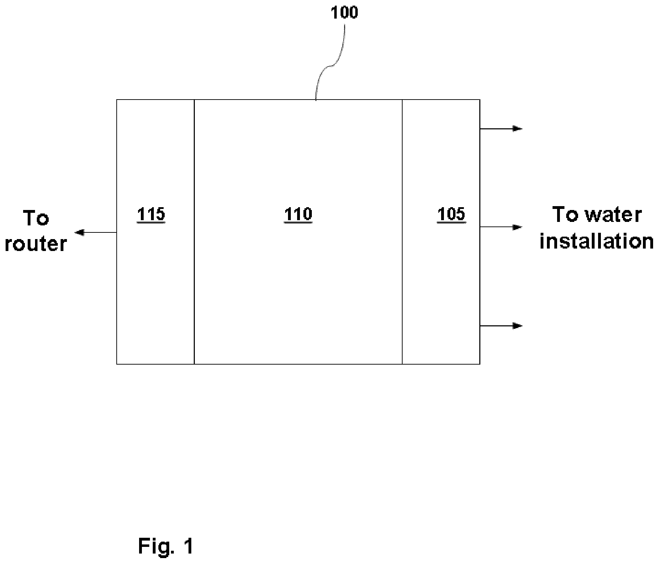

Figure 1 illustrates a block diagram of a water installation controlling apparatus according to an example. The water installation controlling apparatus 100 may comprise an interface module 105, a network access module 110 and an apparatus tunneling module 115. The interface module 105 may be connectable to one or more water installation devices such as water pumps, water temperature controllers, thermostats, lighting installations or the like.

The interface module 105 may be configured to be physically connected to the water installation devices via a cable or it may be wirelessly connected to a wireless module of the water installation devices. The water installation may be a simple water container. Various devices may be used to control aspects of the water installation such as water temperature, lighting, water quantity, water quality etc.

Therefore, a user needs not access each of these devices individually, but may access them remotely through a single controlling apparatus 100. For that purpose, the network access module 110 may be configured to be connected to a network access point such as a router. The router may be available in the vicinity of the water installation, e.g. in a building housing or being next to the water installation, and may be connected to a communication network such as the Internet.

The apparatus tunneling module 115 may then be configured to establish a secure socket layer (SSL) tunnel with a remote server through the network access point. For that purpose, the remote server may also be connected to the communication network. The water installation controlling apparatus 100 may be configured to receive controlling instructions from the remote server and through the SSL tunnel to control the water installation or the devices connected to the water installation.

The water installation controlling apparatus 100 may comprise a descriptor file for each of the water installation devices or for each group of water installation devices of the same type (i.e. with same or similar operation and configuration features). For example, descriptor files may be stored in a repository comprised in the interface module 105. The water installation controlling apparatus 100 may process the descriptor files, when needed, for resolving operation and configuration aspects that are specific for the water installation devices connected to the controlling apparatus 100.

This concentration of operation and configuration aspects in the descriptor files may provide several advantages in comparison with e.g. prior art devices wherein said aspects are locally implemented at the device itself. For example, the proposed approach based on descriptor files may facilitate maintenance or updating of operation and configuration aspects of the devices and may potentiate software reusability and concentration of the software at a single site or location, and so on.

A descriptor file for a water installation device can contain a code structure similar to the following example schema which can be written in an XML format:
<User Interface>
   *Configuration instructions referring to the User Interface to be used for configuring the device*
<Configuration Registers>
   *Register instructions referring to a list of configuration registers of the device to be displayed by the User Interface during configuration of the device*
<Alarms>
   *Register instructions referring to registers of the device to be inspected to detect an alarm of the device*
<Pump>
   *Register instructions referring to registers of the device to be inspected and*/*or updated to interact with a pump device*
<Trigger>
   *Trigger instructions for triggering the device depending on triggering conditions based on e.g. a timer, the status of another device, etc.*
<Data Logging>
   *Instructions referring to registers of the device to be inspected for obtaining measurements sensed by the device and storing them in a database*

In the above example schema, only some tags and corresponding instructions have been included. However, many other tags and instructions may be included in other examples of descriptor files, such as e.g. having the function of identifying the device, performing basic functionalities for operating and configuring the device, etc.

Instructions for identifying the water installation device may refer to the code associated with the device, its hardware version, its firmware version, etc. Instructions for performing basic functionalities may refer to e.g. which register of the device has to be updated to activate the device and which content has to be put in the register to select a particular activation mode, which register of the device has to be updated to deactivate the device and which content has to be put in said register, etc.

The configuration instructions associated with the tag <User Interface> may implement (inside the descriptor file) the user interface to be used or may comprise a pointer to an implementation of the user interface (outside the user interface). This pointer may be based on any known mechanism to indicate where the implementation of the user interface is stored. For example, a corresponding path of a file system object or an Internet link may be used as the pointer to the implementation of the user interface.

This pointer may point to e.g. an area of a repository, file system, etc. of user interfaces arranged in the water installation controlling apparatus, or in a server connected with the water installation controlling apparatus, etc. An aspect of using such a pointer may be that a same implementation of the user interface may be used for configuring different devices. This may potentiate reusability of user interfaces, facilitate maintenance of user interfaces, facilitate re-assignment of user interfaces to different devices, etc.

The register instructions of the tag <Configuration Registers> may provide valuable flexibility to the presentation by the user interface of necessary configuration registers during configuration of the water installation device. These register instructions may explicitly indicate (inside the descriptor file) which registers have to be displayed. Alternatively, the configuration register instructions may comprise a pointer to a site or location where the list of configuration registers is stored (outside the descriptor file).

Similar advantages of reusability, easiness of maintenance and/or re-assignment, etc. can be attributed to the above way of referring to lists of configuration registers to be displayed by the user interface during configuration of the device.

The register instructions associated with the tag <Alarms> may be useful for operating the device in such a way that alarm detection is performed. These alarm register instructions may indicate which register or registers have to be inspected for detecting alarms of the device, which value or values have to contain said alarm register(s) for considering that the device is in an alarm situation, etc.

The register instructions of the tag <Pump> may be useful for operating the interaction of the device with a pump device. A pump device may be an important device because pumping of water is normally required in any type of water installation for e.g. renewing the water in a pool, pressure water jets for hydro-massage, etc. Therefore, the implementation of interaction functionalities between a water installation device and a "main" water pump concentrated in a descriptor file may be very useful to facilitate said interaction and its readjustment.

The trigger instructions associated with the tag <Triggers> may be useful for operating the device in such a way that activation (or deactivation) of the device is triggered depending on predefined conditions. For example, the trigger instructions may implement the triggering of the device when a timer reaches a predefined time value, or when another device reaches a predetermined status (in terms of e.g. a sensed measurement), etc. These functionalities centralized in a descriptor file may provide advantages similar to the ones described before in terms of reusability, easiness of maintenance and/or re-assignment, etc.

The data logging instructions of the tag <Data Logging> may implement functionalities of obtaining sensed measurements in a device with one or more sensors and storing said measurements in a database of historical data. These instructions may indicate how and from which registers the sensed measurements have to be obtained, under which periodicity, to which database the measurements they have to be stored, etc. The historical data accumulated in the database may be advantageously used for diagnosing improvable performance of the water installation device and accordingly re-adjusting the device in order to improve its performance.

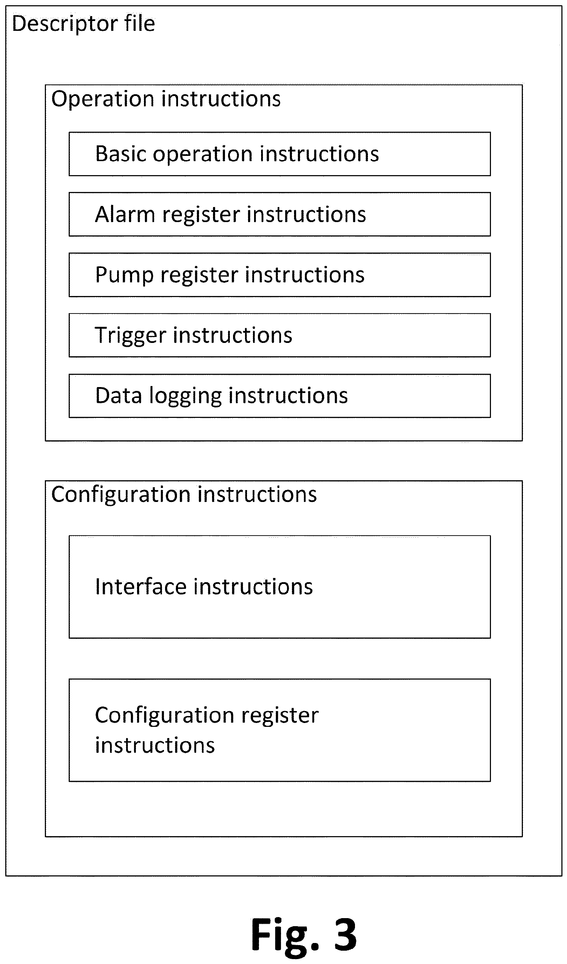

For the sake of better understanding, Figure 3 shows a block diagram schematically illustrating a descriptor file according to an example similar to the example schema described before.

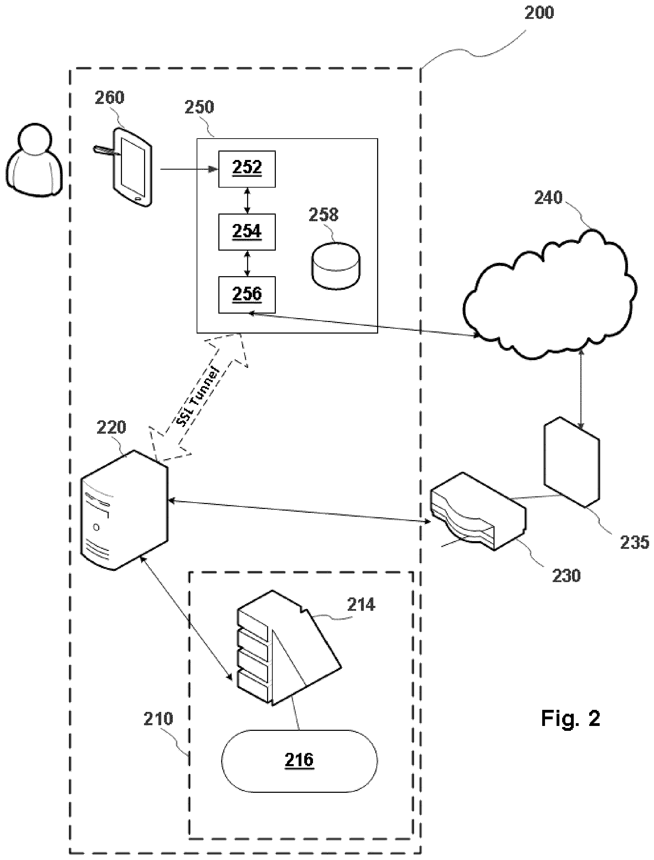

Figure 2 illustrates a block diagram of a water installation system according to an example. Water installation system 200 comprises a water installation configuration 210, a water installation controlling apparatus 220, a remote server 250 and a user device 260. The water installation configuration may comprise a water installation 216 and one or more water installation devices 214. The water installation controlling apparatus 220 may be similar to the one described with reference to Figure 1.

The water installation controlling apparatus 220 and the remote server 250 may be connected between them through an SSL tunnel connection that may be implemented through a communication network 240 such as the internet. A router 230 may provide access to the communication network 240 for the water installation controlling apparatus 220. The router may be protected by a firewall 235. A user may use a user device 260 to connect to the remote server 250 and control the water installation 210.

A secure tunnel may allow controlling remotely the water installation controlling apparatus, for any purposes such as for programming, updating and for maintenance of the apparatus.

The user device 260 may execute an application (app) that displays a graphical interface where the user may interact with displayed control elements. The user may interact in a form to control elements displayed on the user device that provoke the generation of control signals in the form of commands to the devices associated with the pool, spa or similar.

The commands involving actions to be taken by or on the devices associated with the water installation (pool, spa etc.), must first pass by a remote server 250. This transmission of information between the user device 260 and the remote server 250 may be done for example via a global communications network such as the Internet in https packets (SSL encryption). Typically, this server may be arranged remote from the installation of the water installation and may be able to control simultaneously several facilities.

The remote server 250 may comprise an app server 252, a web server 254, an SSL tunneling module 256, and a database 258. The app server 252 (e.g. Tomcat) may have the functions of e.g. receiving commands from the user device 260, providing a login page to the entire system, providing information relevant to the association between users and water installation devices, etc. The web server 254 (e.g. Apache) may be in charge of e.g. controlling the port forwarding and the communications that arrive from the water installation controlling apparatus 220. The SSL tunneling module 256 may have the function of maintaining the SSL tunnel with the water installation controlling apparatus 220. The database 258 may store data required by the app server 252, web server 254, and SSL tunneling module 256.

In the configuration of Figure 2, operation and configuration functionalities for the water installation devices 214 may be provided locally, i.e. at the vicinity of the water installation controlling apparatus 220 through e.g. a panel associated with the controlling apparatus 220. In this case, the water installation controlling apparatus 220 may comprise software configured to operate and configure the corresponding water installation devices 214. This software may provide general operation and configuration functionalities by processing corresponding descriptor files in order to resolve aspects which are exclusive for the water installation devices 214, as described in detail in other parts of the description. This software may also be configured to display on the panel necessary data related with the operation and configuration of the device by processing the descriptor files, as described in detail in other parts of the description.

The configuration of Figure 2 may also permit performing operation and configuration functionalities remotely from the user device 260 through corresponding services provided by the server 250. The server 250 may comprise software providing general operation and configuration functionalities that may remotely access the descriptor files and process them in order to resolve aspects which are exclusive for the water installation devices 214, as described in detail in other parts of the description. For example, this software may remotely execute instructions of the descriptor files and interchange data resulting from said execution(s) with the water installation controlling apparatus 240 in order to resolve the necessary aspects which depend on each particular water installation device. This remote software may also be configured to execute interface instructions of the descriptor files for displaying necessary data related to the operation and configuration of the water installation devices 214.

The platform depicted in Figure 2 may also permit the updating of the descriptor files with new releases of the descriptor files, which can be downloaded via e.g. the SSL Tunnel or another connection suitably established between the controlling apparatus 220 and the server 250. This updating may be selectively performed in such a way that only obsolete versions of the descriptor files are replaced by corresponding new versions. Alternatively, this updating may be massive in such a way that all the descriptor files stored in the controlling apparatus 220 are replaced irrespective of whether a descriptor file is obsolete or not. A selective updating of descriptor files may be based on e.g. user requests and/or an "intelligent" process based on e.g. timestamps comprised in the versions of the descriptor files.

Alternatively, the server 250 may be exclusively dedicated to the operation and configuration of the water installation devices 214, and a further server (not shown in Figure 2) may be exclusively dedicated to the updating of descriptor files. This approach based on two servers may provide better performance because, for example, the risk of overloading separated servers executing separated processes is lower than the risk of overloading a single server executing all the processes. This approach based on two servers may also provide better security because, for example, the risk of simultaneous security violation in separate servers is lower than the risk of security violation in a single server.

The server 250 may provide access to a website of the manufacturer of the water installation devices 214, so that operation and configuration of the devices 214 may be performed through said website from the user device 260. In this sense, a descriptor file may refer to an implementation of a user interface and the server 250 may remotely process the descriptor and cause execution of said user interface as part of an overall process of operating and/or configuring the corresponding device 214. This user interface may be configured to be embedded in a webpage so that the user interface may be processed as an "integral" part of e.g. the manufacturer's website.

As commented in other parts of the description, a descriptor file may have the user interface implemented in the descriptor file itself or, alternatively, may comprise a pointer (or link) pointing to an external location where the implementation of the user interface is stored. The use of a pointer pointing to an implementation of the user interface may offer advantages in terms of improved reusability, maintenance, re-assignment, etc. of user interfaces.

The descriptor files may act as a connection node between the server 250 and the water installation devices 214 in such a way that different technologies at the server 250 and at the devices 214 may co-exist in a platform as the one shown in Figure 2. Since various devices 214 (which may be of the same type) may share a common descriptor file, and/or a common user interface, and/or a common list of registers to be processed, etc. the number of instances of software/code may be minimized and concentrated at a single side. Hence, advantages in terms of reusability, maintenance, re-assignment, etc. of pieces of software/code may be obtained with any of the descriptor files described in the present disclosure, especially in a technological platform as the one shown in Figure 2.

Any of the described descriptor files may be embodied on a storage medium (for example, a CD-ROM, a DVD, a USB drive, on a computer memory or on a read-only memory) or carried on a carrier signal (for example, on an electrical or optical carrier signal).

The carrier may be any entity or device capable of carrying the descriptor file.

For example, the carrier may comprise a storage medium, such as a ROM, for example a CD ROM or a semiconductor ROM, or a magnetic recording medium, for example a hard disk. Further, the carrier may be a transmissible carrier such as an electrical or optical signal, which may be conveyed via electrical or optical cable or by radio or other means.

When the descriptor file is embodied in a signal that may be conveyed directly by a cable or other device or means, the carrier may be constituted by such cable or other device or means.

Alternatively, the carrier may be an integrated circuit in which the descriptor file is embedded, the integrated circuit being adapted for performing, or for use in the performance of, the relevant methods.

## Claims

1. A method of controlling a water installation device (214) by a water installation controlling apparatus (100; 220) by using a descriptor file; wherein
the descriptor file comprises one or more operation instructions and one or more configuration instructions having a textual data format, the one or more configuration instructions including one or more configuration register instructions associated with one or more configuration registers of the water installation device (214); and wherein
the method comprises:
processing the one or more operation instructions by the water installation controlling apparatus (100; 220) in such a way that operation of the water installation device (214) is performed based on the one or more operation instructions; and
processing the one or more configuration instructions by the water installation controlling apparatus (100; 220) in such a way that configuration of the water installation device (214) via a user interface is performed based on the one or more configuration instructions, said processing of the one or more configuration instructions including processing the one or more configuration register instructions in such a way that the configuration of the water installation device (214) includes displaying via the user interface the content of the one or more configuration registers of the water installation device (214) in an updatable manner;
**characterized in that** the one or more configuration register instructions are associated with the one or more configuration registers of the water installation device (214) through a pointer included in the one or more configuration register instructions and pointing to a list of the one or more configuration registers that is outside the descriptor file.

2. A method according to claim 1, wherein
the textual data format of the one or more operation instructions and of the one or more configuration instructions is an Extensible Markup Language (XML) format.

3. A method according to any of claims 1 or 2, wherein
the one or more configuration instructions comprise one or more interface instructions associated with an implementation of the user interface; and wherein
processing the one or more configuration instructions comprises
processing the one or more interface instructions in such a way that the configuration of the water installation device (214) via the user interface is performed using said implementation of the user interface.

4. A method according to claim 3, wherein
the implementation of the user interface is comprised in the one or more interface instructions inside the descriptor file.

5. A method according to any of claims 1 to 4, wherein
the one or more operation instructions comprise one or more alarm register instructions associated with one or more alarm registers of the water installation device (214); and wherein
processing the one or more operation instructions comprises processing the one or more alarm register instructions in such a way that
the operation of the water installation device (214) comprises detecting an alarm of the water installation device (214) based on the content of the one or more alarm registers of the water installation device (214).

6. A method according to any of claims 1 to 5, wherein
the one or more operation instructions comprise one or more pump register instructions associated with one or more pump registers of the water installation device (214); and wherein
processing the one or more operation instructions comprises processing the one or more pump register instructions in such a way that
the operation of the water installation device (214) comprises generating a request/confirmation from the water installation device (214) to a water pump device based on the content of the one or more pump registers of the water installation device (214).

7. A method according to any of claims 1 to 6, wherein
the one or more operation instructions comprise one or more trigger instructions implementing one or more trigger conditions in such a way that
the operation of the water installation device (214) comprises triggering activation of the water installation device (214) when at least one of the trigger conditions is satisfied.

8. A method according to claim 7, wherein
the one or more trigger conditions comprise a trigger condition depending on a timer, such that the timer depending trigger condition is satisfied when the timer reaches a predefined time value.

9. A method according to any of claims 7 or 8, wherein
the one or more trigger conditions comprise a trigger condition depending on the status of another water installation device (214), such that the status dependent trigger condition is satisfied when said another water installation device (214) reaches a predefined status.

10. A method according to any of claims 1 to 9, wherein
the one or more operation instructions comprise one or more data logging instructions associated with one or more data logging registers of the water installation device (214); and wherein
processing the one or more operation instructions comprises processing the one or more data logging instructions in such a way that
the operation of the water installation device (214) comprises periodically storing the content of the one or more data logging registers of the water installation device (214) in a repository.

11. A water installation controlling apparatus (100; 220) configured to use a descriptor file to perform a method of controlling a water installation device (214) according to any of claims 1 to 10.

## Patentansprüche

1. Ein Verfahren zur Steuerung von einer Wasseranlagevorrichtung (214) mittels eines Wasseranlagesteuergeräts (100; 220) unter Verwendung von einer Deskriptor-Datei; wobei
die Deskriptor-Datei eine oder mehrere Operationsanweisungen und eine oder mehrere Konfigurationsanweisungen umfasst, die ein Textdateiformat haben, wobei die eine oder die mehreren Konfigurationsanweisungen eine oder mehrere Konfigurationsregisteranweisungen umfasst bzw. umfassen, die mit einem oder mehreren Konfigurationsregistern der Wasseranlagevorrichtung (214) verknüpft sind; und wobei
das Verfahren folgendes umfasst:
das Bearbeiten von der einen oder den mehreren Operationsanweisungen mittels des Wasseranlagesteuergeräts (100; 220), so dass die Operation der Wasseranlagevorrichtung (214) beruhend auf der einen oder den mehreren Operationsanweisungen durchgeführt wird; und
das Bearbeiten von der einen oder den mehreren Konfigurationsanweisungen mittels des Wasseranlagesteuergeräts (100; 220), so dass die Konfiguration der Wasseranlagevorrichtung (214) über eine Benutzer-Schnittstelle beruhend auf der einen oder auf den mehreren Konfigurationsanweisungen durchgeführt wird, wobei das Bearbeiten von der einen oder von den mehreren Konfigurationsanweisungen das Bearbeiten von der einen oder den mehreren Konfigurationsregisteranweisungen umfasst, so dass die Konfiguration der Wasseranlagevorrichtung (214) das Anzeigen des Inhaltes von der einen oder den mehreren Konfigurationsregistern der Wasseranlagevorrichtung (214) über die Benutzer-Schnittstelle auf aktualisierende Weise umfasst;
**dadurch gekennzeichnet, dass** die eine oder die mehreren Konfigurationsregisteranweisungen mit dem einen oder den mehreren Konfigurationsregistern der Wasseranlagevorrichtung (214) über einen Zeiger verknüpft sind, der in der einen oder in den mehreren Konfigurationsregisteranweisungen enthalten ist und der auf eine Liste von der einen oder den mehreren Konfigurationsregistern zeigt, die außerhalb der Deskriptor-Datei ist.

2. Ein Verfahren nach Anspruch 1, wobei
das Textdateiformat von der einen oder den mehreren Operationsanweisungen und von der einen oder den mehreren Konfigurationsanweisungen ein XML (*Extensible Markup Language -* erweiterbare Auszeichnungssprache)-Format ist.

3. Ein Verfahren nach einem der Ansprüche 1 oder 2, wobei
die eine oder die mehreren Konfigurationsanweisungen eine oder mehrere Schnittstelleanweisungen umfasst, die mit einer Implementierung der Benutzer-Schnittstelle verknüpft ist bzw. sind; und wobei
das Bearbeiten von der einen oder den mehreren Konfigurationsanweisungen folgendes umfasst
das Bearbeiten von der einen oder den mehreren Schnittstelleanweisungen, so dass die Konfiguration der Wasseranlagevorrichtung (214) über die Benutzer-Schnittstelle unter Verwendung von der Implementierung der Benutzer-Schnittstelle durchgeführt wird.

4. Ein Verfahren nach Anspruch 3, wobei
die Implementierung der Benutzer-Schnittstelle in der einen oder den mehreren Schnittstelleanweisungen innerhalb der Deskriptor-Datei enthalten ist.

5. Ein Verfahren nach einem der Ansprüche 1 bis 4, wobei
die eine oder die mehreren Operationsanweisungen eine oder mehrere Alarmregisteranweisungen umfassen, die mit einem oder mehreren Alarmregistern der Wasseranlagevorrichtung (214) verknüpft sind; und wobei
das Bearbeiten von der einen oder den mehreren Operationsanweisungen das Bearbeiten von der einen oder den mehreren Alarmregisteranweisungen umfasst, so dass
die Operation der Wasseranlagevorrichtung (214) das Erkennen von einem Alarm der Wasseranlagevorrichtung (214) beruhend auf dem Inhalt von dem einen oder den mehreren Alarmregistern der Wasseranlagevorrichtung (214) umfasst.

6. Ein Verfahren nach einem der Ansprüche 1 bis 5, wobei
die eine oder die mehreren Operationsanweisungen eine oder mehrere Pumpregisteranweisungen umfassen, die mit einem oder mehreren Pumpregistern der Wasseranlagevorrichtung (214) verknüpft sind; und wobei
das Bearbeiten von der einen oder den mehreren Operationsanweisungen das Bearbeiten von der einen oder den mehreren Pumpregisteranweisungen umfasst, so dass
die Operation der Wasseranlagevorrichtung (214) das Erzeugen von einer Anfrage/Bestätigung aus der Wasseranlagevorrichtung (214) an eine Wasserpumpvorrichtung beruhend auf dem Inhalt von dem einen oder den mehreren Pumpregistern der Wasseranlagevorrichtung (214) umfasst.

7. Ein Verfahren nach einem der Ansprüche 1 bis 6, wobei
die eine oder die mehreren Operationsanweisungen eine oder mehrere Auslöseanweisungen umfasst, welche eine oder mehrere Auslösebedingungen implementieren, so dass
die Operation der Wasseranlagevorrichtung (214) das Auslösen der Aktivierung der Wasseranlagevorrichtung (214) umfasst, wenn mindestens eine von den Auslösebedingungen erfüllt ist.

8. Ein Verfahren nach Anspruch 7, wobei
die eine oder die mehreren Auslösebedingungen eine Auslösebedingung umfassen, die von einem Timer abhängt, so dass die von dem Timer abhängende Auslösebedingung erfüllt wird, wenn der Timer einen vorher definierten Zeitwert erreicht.

9. Ein Verfahren nach einem der Ansprüche 7 oder 8, wobei
die eine oder die mehreren Auslösebedingungen eine Auslösebedingung umfassen, die von dem Zustand von einer weiteren Wasseranlagevorrichtung (214) abhängt, so dass die von dem Zustand abhängende Auslösebedingung erfüllt wird, wenn die weitere Wasseranlagevorrichtung (214) einen vorher definierten Zustand erreicht.

10. Ein Verfahren nach einem der Ansprüche 1 bis 9, wobei
die eine oder die mehreren Operationsanweisungen eine oder mehrere Datenerfassungsanweisungen umfassen, die mit einem oder mehreren Datenerfassungsregistern der Wasseranlagevorrichtung (214) verknüpft sind; und wobei
das Bearbeiten von der einen oder den mehreren Operationsanweisungen das Bearbeiten von der einen oder den mehreren Datenerfassungsanweisungen umfasst, so dass
die Operation der Wasseranlagevorrichtung (214) das periodische Speichern des Inhaltes von dem einen oder den mehreren Datenerfassungsregistern der Wasseranlagevorrichtung (214) in einem Speicher umfasst.

11. Ein Wasseranlagesteuergerät (100; 220), das konfiguriert ist, um eine Deskriptor-Datei zu verwenden, um ein Verfahren zur Steuerung von einer Wasseranlagevorrichtung (214) nach einem der Ansprüche 1 bis 10 durchzuführen.

## Revendications

1. Un procédé de contrôle d'un dispositif d'installation hydraulique (214) moyennant un appareil de contrôle d'installation hydraulique (100 ; 220) en utilisant un fichier descripteur ; dans lequel
le fichier descripteur comprend une ou plusieurs instructions d'opération et une ou plusieurs instructions de configuration ayant un format de données de texte, l'une ou les plusieurs instructions de configuration incluant une ou plusieurs instructions de registre de configuration liées à un ou à plusieurs registres de configuration du dispositif d'installation hydraulique (214) ; et dans lequel
le procédé comprend :
traiter l'une ou les plusieurs instructions d'opération moyennant l'appareil de contrôle d'installation d'eau (100 ; 220) de façon que l'opération du dispositif d'installation hydraulique (214) est effectuée sur la base de l'une ou des plusieurs instructions d'opération ; et
traiter l'une ou les plusieurs instructions de configuration moyennant l'appareil de contrôle d'installation d'eau (100 ; 220) de façon que la configuration du dispositif d'installation hydraulique (214) à travers une interface d'utilisateur est effectuée sur la base de l'une ou des plusieurs instructions de configuration, ledit traitement de l'une ou des plusieurs instructions de configuration incluant traiter l'une ou les plusieurs instructions de registre de configuration de façon que la configuration du dispositif d'installation hydraulique (214) inclut afficher à travers l'interface d'utilisateur le contenu de l'un ou des plusieurs registres de configuration du dispositif d'installation hydraulique (214) d'une manière actualisable ;
**caractérisé en ce que** l'une ou les plusieurs instructions de registre de configuration sont liées à l'un ou aux plusieurs registres de configuration du dispositif d'installation hydraulique (214) à travers un indicateur inclus dans l'une ou les plusieurs instructions de registre de configuration et indiquant une liste de l'un ou des plusieurs registres de configuration qui est hors du fichier descripteur.

2. Un procédé selon la revendication 1, dans lequel
le format de données de texte de l'une ou des plusieurs instructions d'opération et de l'une ou des plusieurs instructions de configuration est un format XML (*Extensible Markup Language* - langage de balisage extensible).

3. Un procédé selon l'une quelconque des revendications 1 ou 2, dans lequel
l'une ou les plusieurs instructions de configuration comprennent une ou plusieurs instructions d'interface liées à une mise en oeuvre de l'interface d'utilisateur ; et dans lequel
le traitement de l'une ou des plusieurs instructions de configuration comprend
traiter l'une ou les plusieurs instructions d'interface de façon que la configuration du dispositif d'installation hydraulique (214) à travers l'interface d'utilisateur est effectuée en utilisant ladite mise en oeuvre de l'interface d'utilisateur.

4. Un procédé selon la revendication 3, dans lequel
la mise en oeuvre de l'interface d'utilisateur est comprise en l'une ou les plusieurs instructions d'interface dans le fichier descripteur.

5. Un procédé selon l'une quelconque des revendications 1 à 4, dans lequel
l'une ou les plusieurs instructions d'opération comprennent une ou plusieurs instructions de registre d'alarme liées à un ou à plusieurs registres d'alarme du dispositif d'installation hydraulique (214) ; et dans lequel
traiter l'une ou les plusieurs instructions d'opération comprend traiter l'une ou les plusieurs instructions de registre d'alarme de façon que
l'opération du dispositif d'installation hydraulique (214) comprend détecter une alarme du dispositif d'installation hydraulique (214) sur la base du contenu de l'un ou des plusieurs registres d'alarme du dispositif d'installation hydraulique (214).

6. Un procédé selon l'une quelconque des revendications 1 à 5, dans lequel
l'une ou les plusieurs instructions d'opération comprennent une ou plusieurs instructions de registre de pompage liées à un ou à plusieurs registres de pompage du dispositif d'installation hydraulique (214) ; et dans lequel
traiter l'une ou les plusieurs instructions d'opération comprend traiter l'une ou les plusieurs instructions de registre de pompage de façon que
l'opération du dispositif d'installation hydraulique (214) comprend générer une demande/confirmation du dispositif d'installation hydraulique (214) à un dispositif de pompage d'eau sur la base du contenu de l'un ou des plusieurs registres de pompage du dispositif d'installation hydraulique (214).

7. Un procédé selon l'une quelconque des revendications 1 à 6, dans lequel
l'une ou les plusieurs instructions d'opération comprennent une ou plusieurs instructions de déclenchement mettant en œuvre une ou plusieurs conditions de déclenchement de façon que
l'opération du dispositif d'installation hydraulique (214) comprend le déclenchement de l'activation du dispositif d'installation hydraulique (214) lorsqu'au moins l'une des conditions de déclenchement est satisfaite.

8. Un procédé selon la revendication 7, dans lequel
l'une ou les plusieurs conditions de déclenchement comprennent une condition de déclenchement dépendante d'une minuterie, de façon que la condition de déclenchement dépendante de la minuterie est satisfaite lorsque la minuterie atteint une valeur de temps prédéterminée.

9. Un procédé selon l'une quelconque des revendications 7 ou 8, dans lequel
l'une ou les plusieurs conditions de déclenchement comprennent une condition de déclenchement dépendante de l'état d'un autre dispositif d'installation d'eau (214), de façon que la condition de déclenchement dépendante de l'état est satisfaite lorsque ledit autre dispositif d'installation d'eau (214) atteint un état prédéfini.

10. Un procédé selon l'une quelconque des revendications 1 à 9, dans lequel
l'une ou les plusieurs instructions d'opération comprennent une ou plusieurs instructions d'enregistrement de données liées à un ou à plusieurs registres d'enregistrement de données du dispositif d'installation hydraulique (214) ; et dans lequel
traiter l'une ou les plusieurs instructions d'opération comprend traiter l'une ou les plusieurs instructions d'enregistrement de données de façon que
l'opération du dispositif d'installation hydraulique (214) comprend stocker de manière périodique le contenu de l'un ou des plusieurs registres d'enregistrement de données du dispositif d'installation hydraulique (214) dans un référentiel.

11. Un appareil de contrôle d'installation hydraulique (100 ; 220) configuré pour utiliser un fichier descripteur pour exécuter un procédé de contrôle d'un dispositif d'installation hydraulique (214) selon l'une quelconque des revendications 1 à 10.
